# EUROPEAN PATENT APPLICATION

(11) **EP 4 723 282 A1**
(43) Date of publication of application: **08.04.2026**
(21) Application number: 23953957.0
(22) Date of filing: 13.11.2023
(51) Int. Cl.: H01M 10/0567, H01M 10/0525

(54) **ELECTROLYTE, SECONDARY BATTERY, AND ELECTRICAL APPARATUS**

(30) Priority: 28.09.2023 CN 202311276886
(71) Applicant: Contemporary Amperex Technology Co., Limited, Ningde, Fujian 352100 (CN)
(72) Inventor: HUANG, Lei, Ningde, Fujian 352100 (CN); HAN, Changlong, Ningde, Fujian 352100 (CN); WANG, Fulin, Ningde, Fujian 352100 (CN); DENG, Yilin, Ningde, Fujian 352100 (CN); WU, Zeli, Ningde, Fujian 352100 (CN); ZHANG, Cuiping, Ningde, Fujian 352100 (CN)
(74) Representative: Gong, Jinping
(86) International application number: PCT/CN2023/131339
(87) International publication number: WO 2025/065823

(57) **Abstract**

An electrolyte, a secondary battery, and an electrical apparatus. The electrolyte includes a first additive, a second additive, and a third additive. The first additive comprises an element-containing inorganic salt; the second additive comprises an unsaturated bond-containing compound, the reduction potential of the unsaturated bond-containing compound being greater than or equal to 0.8V(Li⁺/Li); and the third additive comprises an amide group-containing compound. The first additive, the second additive, and the third additive are added to the electrolyte, so as to improve both high-temperature performance and low-temperature performance of a secondary battery.

## Description

The present application refers to Chinese Patent Application No. 202311276886.8 titled "ELECTROLYTE SOLUTION, SECONDARY BATTERY, AND ELECTRICAL APPARATUS" filed on 28 September 2023, which is incorporated into the present application by reference in its entirety.

### Technical Field

The present application relates to the technical field of secondary batteries, and particularly relates to an electrolyte solution, a secondary battery, and an electrical apparatus.

### Background

The description here merely provides background information related to the present application, and does not necessarily constitute the prior art.

In recent years, due to advantages, such as high open-circuit voltage, high energy density, long service life, memoryless effect, no pollution, and low self-discharge, lithium-ion batteries are widely applied in energy storage power systems, such as water, fire, wind, and solar power stations, as well as many fields, such as electric tools, electric bicycles, electric motorcycles, electric vehicles, military equipment, and aerospace. With the development of lithium-ion batteries, higher requirements are presented for performance thereof. However, in the related art, it is difficult to balance between high-temperature performance and low-temperature performance of lithium-ion batteries, thereby restricting the application of the lithium-ion batteries to a certain extent.

### Summary of the Invention

In view of the above-mentioned issues, the present application is provided, and is intended to provide an electrolyte solution that can balance between the high-temperature performance and the low-temperature performance of a secondary battery, and further provide a secondary battery and an electrical apparatus.

In order to achieve the above purpose, a first aspect of the present application provides an electrolyte solution, comprising:
a first additive comprising an inorganic salt containing fluorine element;
a second additive comprising a compound containing an unsaturated bond, wherein the compound containing an unsaturated bond has a reduction potential of greater than or equal to 0.8 V(Li⁺/Li); and
a third additive comprising a compound containing an amide group.

The second additive comprises a compound containing an unsaturated bond with a reduction potential of greater than or equal to 0.8V(Li⁺/Li), and can generate a polymer through a reduction reaction on a surface of the negative electrode during battery formation, forming a SEI film to passivate the negative electrode, thereby avoiding continuous side reactions caused by direct contact between the solvent and the negative electrode, achieving excellent passivation effect on the negative electrode, and improving the high-temperature performance of the battery. The first additive comprises a compound containing fluorine element, and is decomposed at the negative electrode to form a SEI film containing an F-type inorganic compound, which has a wider band gap and higher ionic conductivity, can improve the ionic conductivity of the SEI film, reduce the diffusion energy barrier of lithium ions, facilitate transport of lithium ions, and reduce charge transfer impedance of the low-temperature interface, thereby improving the low-temperature performance. The lithium ions in the electrolyte solution will combine with solvent molecules and anions to form solvated lithium ions, which migrate to the negative electrode during charging, are desolvated when reaching the SEI film, and are intercalated in the negative electrode through the SEI film; the third additive comprises a compound containing an amide group, which therefore can also be involved in the formation of a solvated structure, negatively charged N in the amide group strongly interacts with the lithium ions, and the third additive can replace cyclic ester, thereby reducing the use amount of cyclic ester in the solvated structure, significantly reducing active energy of the lithium ions in the desolvation process, more easily desolvating the lithium ions, and improving the low-temperature kinetics. Therefore, in the present application, the first additive, the second additive, and the third additive are added to the electrolyte solution to exert a synergistic effect, and improve both the high-temperature performance and the low-temperature performance of the secondary battery.

In some embodiments, mass proportion of the first additive in the electrolyte solution is A%, mass proportion of the second additive in the electrolyte solution is B%, mass proportion of the third additive in the electrolyte solution is C%, and the A, the B, and the C satisfy: 2%≤(A+C)/B≤120%; and
optionally, 5%<(A+C)/B<55%.

In some embodiments, 0.01≤A≤1.

In some embodiments, 0.5≤B≤10.

In some embodiments, 0.01≤C≤0.1.

In some embodiments, mass proportion of the fluorine element in the inorganic salt is greater than or equal to 8%; and
optionally, the first additive comprises one or more of a difluorophosphate, a tetrafluoroborate, and a fluorosulfonate containing M element, the M element comprising one or more of Li, Na, K, and Cs.

In some embodiments, the second additive comprises a cyclic compound containing an unsaturated bond; and
optionally, the second additive comprises one or more of vinylene carbonate, 1,3-propanesultone, ethylene sulfate, and bis(ethylene sulfate).

In some embodiments, the third additive comprises one or more of compounds represented by formulas (I) and (II) below: 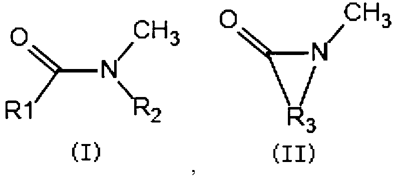
wherein R₁ and R₂ each independently comprise any one of hydrogen, methyl, and ethyl, and R₃ comprises a C₃-C₆ alkyl; and
optionally, the third additive comprises one or more of N,N-dimethylformamide and N-methylpyrrolidone.

In some embodiments, the electrolyte solution further comprises a cyclic ester solvent;
optionally, the cyclic ester solvent comprises one or more of ethylene carbonate and propylene carbonate;
further optionally, mass proportion of the ethylene carbonate in the electrolyte solution is D%, and the C and the D satisfy 0.01%≤C/D≤1%; and
still further optionally, 5≤D≤35.

In some embodiments, the electrolyte solution further comprises a lithium salt;
optionally, the lithium salt comprises one or more of lithium hexafluorophosphate, lithium bis(fluorosulfonyl)imide, and lithium bis(trifluoromethylsulfonyl)imide; and
optionally, mass proportion of the lithium salt in the electrolyte solution is 5%-15%.

A second aspect of the present application provides a secondary battery, comprising the electrolyte solution in the first aspect of the present application.

The secondary battery of the present application has both excellent high-temperature performance and excellent low-temperature performance.

In some embodiments, the secondary battery comprises a negative electrode plate, the negative electrode plate comprises a negative electrode active material layer, the negative electrode active material layer comprises a negative electrode active material; surface density of the negative electrode active material layer is Eg/m², specific surface area of the negative electrode active material is Fm²/g, and mass proportion of the negative electrode active material in the negative electrode active material layer is L;
the mass proportion of the second additive in the electrolyte solution is B%; and
the B, the E, the F, and the L satisfy: 0.5%≤B/(E*F*L)≤12%.

In some embodiments, 80≤E≤150.

In some embodiments, 0.5≤F≤5.

In some embodiments, 93%≤L≤98%.

A third aspect of the present application provides an electrical apparatus, comprising at least one of the electrolyte solution in the first aspect of the present application and the secondary battery in the second aspect of the present application.

The electrical apparatus in the present application comprises the secondary battery provided in the present application, and thus has at least the same advantages as the secondary battery.

Details of one or more embodiments of the present application are presented in the drawings and description below. Other features, objectives, and advantages of the present application will become apparent from the specification, drawings, and claims.

### Description of Drawings

In order to better describe and illustrate the embodiments or examples provided in the present application, reference may be made to one or more of the figures. The additional details or examples used to describe the drawings should not be considered as limiting the scope of the disclosed applications, currently described embodiments or examples, and any one of currently understood preferred embodiments of these applications. Moreover, in all of the figures, identical parts are represented by identical reference numerals. In the figures:
FIG. 1 is a schematic diagram of a battery cell in an embodiment of the present application.
FIG. 2 is an exploded view of the battery cell in an embodiment of the present application as shown in FIG. 1.
FIG. 3 is a schematic diagram of a battery module in an embodiment of the present application.
FIG. 4 is a schematic diagram of a battery pack in an embodiment of the present application.
FIG. 5 is an exploded view of the battery pack in an embodiment of the present application shown in FIG. 4.
FIG. 6 is a schematic diagram of an electrical apparatus in which a secondary battery is used as a power source in an embodiment of the present application.

Reference numerals in the figures:
1. Battery pack; 2. Upper box; 3. Lower box; 4. Battery module; 5. Battery cell; 51. Case; 52. Electrode assembly; 53. Cover plate; 6. Electrical apparatus.

### Detailed Description

Some embodiments of the electrolyte solution, the secondary battery, and the electrical apparatus of the present application are described in detail below with reference to the drawings as appropriate. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

The "range" disclosed in the present application is defined in the form of a lower limit and an upper limit, a given range is defined by selection of a lower limit and an upper limit, and the selected lower limit and upper limit define boundaries of the particular range. A range defined in this way may be inclusive or exclusive of end values, any one of which may be independently included or excluded, and may be combined in any way, that is, any lower limit may be combined with any upper limit to form a range. For example, if the ranges of 60-120 and 80-110 are enumerated for a particular parameter, it is understood that the ranges of 60-110 and 80-120 are also contemplatable. Additionally, if the minimum range values 1 and 2 are enumerated, and if the maximum range values 3, 4 and 5 are further enumerated, the following ranges are all contemplatable: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been enumerated herein, and "0-5" is just an abbreviated representation of combinations of these numerical values. In addition, when a parameter is expressed as an integer greater than or equal to 2, it is equivalent to enumerating that the parameter is, for example, an integer of 2, 3, 4, 5, 6, 7, 8, 9, 10, 11, 12, or the like. For example, when a parameter is expressed as an integer selected from "2-10", it is equivalent to enumerating an integer of 2, 3, 4, 5, 6, 7, 8, 9, and 10.

The "plurality" involved in the present application, unless otherwise specified, refers to a number greater than 2 or equal to 2. For example, the "one or more" means one or greater than or equal to two.

Unless otherwise particularly stated, all embodiments and optional embodiments of the present application may be combined with each other to form new technical solutions.

Reference herein to "an embodiment" means that a particular feature, structure, or characteristic described in connection with the embodiment can be comprised in at least one example or embodiment of the present application. The appearances of the phrase in various places in the specification neither necessarily refer to a same embodiment, nor are independent or alternative embodiments mutually exclusive from other embodiments. Those skilled in the art understand, both explicitly and implicitly, that the embodiments described herein may be combined with other embodiments. The "embodiment" mentioned herein is understood similarly.

Those skilled in the art can understand that in the method of each embodiment, the presentation sequence of steps does not mean a strict execution sequence and thus does not constitute any limitation to the implementation process. The detailed execution sequence of the steps should be determined by functions and possible internal logic thereof. Unless otherwise particularly stated, all steps in the present application may be performed sequentially or may be performed randomly, and are preferably performed sequentially. For example, the method comprises steps (a) and (b), meaning that the method may comprise steps (a) and (b) performed sequentially, or may comprise steps (b) and (a) performed sequentially. For example, the reference to the method may further comprise step (c), which means that step (c) may be added to the method in any sequence, for example, the method may comprise steps (a), (b) and (c), or may comprise steps (a), (c) and (b), or may comprise steps (c), (a) and (b), and so on.

In the present application, in open-ended technical features or technical solutions described with the wordings such as "contain," "include," or "comprise," unless otherwise stated, additional members other than the enumerated members are not excluded, which may be regarded as providing both close-ended features or solutions consisting of the enumerated members and open-ended features or solutions including additional members in addition to the enumerated members. For example, A comprises a1, a2, and a3, and unless otherwise stated, may further comprise other members or may not comprise additional members, which may be regarded as providing both the feature or solution that "A consists of a1, a2, and a3" and the feature or solution that "A not only comprises a1, a2, and a3, but also comprises other members." In the present application, unless otherwise stated, A (such as B) means that B is a non-limiting example of A, and may be understood as that A is not limited to B.

In the present application, the "optionally" and "optional" mean dispensable, that is, they mean any one selected from two parallel solutions of "presence" or "absence." If a plurality of "optional" appear in a technical solution, unless otherwise particularly stated and in the case of no contradiction or mutually restrictive relationship, each "optional" is independent.

In the related art, it is difficult to balance between high-temperature performance and low-temperature performance of lithium-ion batteries, thereby restricting the application of the lithium-ion batteries to a certain extent.

Based on the above problems, the present application provides an electrolyte solution, to which a first additive, a second additive, and a third additive are all added to improve both high-temperature performance and low-temperature performance of a secondary battery.

The first aspect of the present application provides an electrolyte solution, comprising a first additive, a second additive, and a third additive; the first additive comprises an inorganic salt containing fluorine element; the second additive comprises a compound containing an unsaturated bond, the compound containing an unsaturated bond has a reduction potential of greater than or equal to 0.8V(Li⁺/Li); and the third additive comprises a compound containing an amide group.

It is understandable that the second additive comprises the compound containing an unsaturated bond with a reduction potential of greater than or equal to 0.8V(Li⁺/Li), and can generate a polymer through a reduction reaction on a surface of the negative electrode during battery formation, forming a SEI film to passivate the negative electrode, thereby avoiding continuous side reactions caused by direct contact between the solvent and the negative electrode, achieving excellent passivation effect on the negative electrode, and improving the high-temperature performance of the battery. The first additive comprises a compound containing fluorine element, and is decomposed at the negative electrode to form a SEI film containing an F-type inorganic compound, which has a wider band gap and higher ionic conductivity, can improve the ionic conductivity of the SEI film, reduce the diffusion energy barrier of lithium ions, facilitate transport of lithium ions, and reduce charge transfer impedance of the low-temperature interface, thereby improving the low-temperature performance. The lithium ions in the electrolyte solution will combine with solvent molecules and anions to form solvated lithium ions, which migrate to the negative electrode during charging, are desolvated when reaching the SEI film, and are intercalated in the negative electrode through the SEI film; the third additive comprises a compound containing an amide group, which therefore can also be involved in the formation of a solvated structure, negatively charged N in the amide group strongly interacts with the lithium ions, and the third additive can replace cyclic ester, thereby reducing the use amount of cyclic ester in the solvated structure, significantly reducing active energy of the lithium ions in the desolvation process, more easily desolvating the lithium ions, and improving the low-temperature kinetics. Therefore, in the present application, the first additive, the second additive, and the third additive are added to the electrolyte solution to improve both the high-temperature performance and the low-temperature performance of the secondary battery.

In some embodiments, mass proportion of the first additive in the electrolyte solution is A%, mass proportion of the second additive in the electrolyte solution is B%, mass proportion of the third additive in the electrolyte solution is C%, and the A, the B, and the C satisfy: 2%≤(A+C)/B≤120%. As an example, (A+C)/B may be, but is not limited to, 2%, 5%, 10%, 15%, 20%, 25%, 30%, 35%, 40%, 45%, 50%, 55%, 60%, 65%, 70%, 75%, 80%, 85%, 90%, 95%, 100%, 105%, 110%, 115%, 120%, or a range between any two of the above values. When the A, the B, and the C satisfy the above relationship, both the high-temperature performance and the low-temperature performance of the secondary battery can be significantly improved; when the (A+C)/B is lower than the above range, the improvement of the low-temperature performance of the secondary battery is limited; and when the (A+C)/B is higher than the above range, the high-temperature performance of the secondary battery is limited.

In some optional embodiments, 5%<(A+C)/B<55%.

It should be noted that the A% refers to the mass proportion of the first additive in the electrolyte solution in the battery cell obtained after formation or in the battery cell after further charge-discharge cycles. The B% refers to the mass proportion of the second additive in the electrolyte solution in the battery cell obtained after formation or in the battery cell after further charge-discharge cycles. The C% refers to the mass proportion of the third additive in the electrolyte solution in the battery cell obtained after formation or in the battery cell after further charge-discharge cycles. The "battery cell obtained after formation" refers to a fresh battery cell obtained after formation without further charge-discharge cycles.

In some possible embodiments, 0.01≤A≤1; for example, the A may be, but is not limited to, 0.01, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1, or a range between any two of the above values. When the mass proportion (A%) of the first additive in the electrolyte solution is lower than 0.1%, the low-temperature performance of the secondary battery may not be effectively improved; during the battery cycles, with lithium deintercalation at the negative electrode, the negative electrode expands and shrinks accordingly, and the volume of the negative electrode changes greatly; and due to poor mechanical stability, an inorganic SEI film tends to crack when the volume of the negative electrode changes greatly, thus exposing new active sites and continuously inducing side reactions. Therefore, when the mass proportion (A%) of the first additive in the electrolyte solution is higher than 1%, the improvement effect on the high-temperature cycling performance of the secondary battery may show a downtrend.

In some possible embodiments, 0.5≤B≤10; for example, the B may be, but is not limited to, 0.5, 1, 1.5, 2, 2.5, 3, 3.5, 4, 4.5, 5, 5.5, 6, 6.5, 7, 7.5, 8, 8.5, 9, 9.5, 10, or a range between any two of the above values. When the mass proportion (B%) of the second additive in the electrolyte solution is lower than 1%, the high-temperature performance of the secondary battery may not be effectively improved; and the second additive forms an SEI film, which will increase the battery impedance, and particularly obviously increase the low-temperature impedance, so that when the mass proportion (B%) of the second additive in the electrolyte solution is higher than 10%, it may not be conductive to the low-temperature discharge performance.

In some possible embodiments, 0.01≤C≤0.1; for example, the C may be, but is not limited to, 0.01, 0.015, 0.02, 0.025, 0.03, 0.035, 0.04, 0.045, 0.05, 0.055, 0.06, 0.065, 0.07, 0.075, 0.08, 0.085, 0.09, 0.095, 0.1, or a range between any two of the above values. When the mass proportion (C%) of the third additive in the electrolyte solution is lower than 0.01%, the low-temperature performance of the secondary battery may not be effectively improved; and the third additive itself has poor electrochemical stability, tends to have reduction side reactions at the negative electrode, thus affecting the stability of the SEI film, and has aggravated reduction side reactions at a high temperature. Therefore, when the mass proportion (C%) of the third additive in the electrolyte solution is higher than 0.1%, the high-temperature cycle life of the battery may be affected.

As an example, the mass proportion (A%) of the first additive in the electrolyte solution mentioned above can be determined with reference to JY/T 0575-2020 General rules of analytical methods for ion chromatography.

The mass proportion (B%) of the second additive in the electrolyte solution and the mass proportion (C%) of the third additive in the electrolyte solution mentioned above can be determined with reference to GB/T9722-2006 Chemical reagent-General rules for the gas chromatography.

In some embodiments, mass proportion of the fluorine element in the inorganic salt is greater than or equal to 8%; for example, may be, but is not limited to, 8%, 10%, 13%, 15%, 17%, 20%, 23%, 25%, 27%, 30%, 40%, 50%, 60%, 70%, 80%, or a range between any two of the above values. When the mass proportion of the fluorine element in the inorganic salt is within the above range, the fluoride content in the SEI film can be effectively improved, which is conductive to improving the ionic conductivity of the SEI film.

As an example, the mass proportion of the fluorine element in the inorganic salt mentioned above can be determined with reference to JY/T 0567-2020 General rules for inductively coupled plasma optical emission spectrometry.

In some embodiments thereof, the first additive comprises one or more of a difluorophosphate, a tetrafluoroborate, and a fluorosulfonate containing M element, the M element comprising one or more of Li, Na, K, and Cs.

In some embodiments thereof, the first additive comprises one or more of lithium difluorophosphate, lithium tetrafluoroborate, and lithium fluorosulfonate.

In some embodiments, the second additive comprises a cyclic compound containing an unsaturated bond; and tends to be reduced at the negative electrode to form an oligomer.

As a possible embodiment, the second additive comprises one or more of vinylene carbonate, 1,3-propanesultone, ethylene sulfate, and bis(ethylene sulfate).

In some embodiments, the third additive comprises one or more of compounds represented by formulas (I) and (II) below: 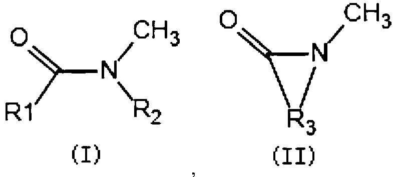 wherein R₁ and R₂ each independently comprise any one of hydrogen, methyl, and ethyl, and R₃ comprises a C₃-C₆ alkyl.

As a possible embodiment, the third additive comprises one or more of N,N-dimethylformamide and N-methylpyrrolidone.

In some embodiments, the electrolyte solution further comprises a cyclic ester solvent.

In some possible embodiments, the cyclic ester solvent comprises one or more of ethylene carbonate and propylene carbonate.

Ethylene carbonate has a high dielectric constant, can dissociate a lithium salt to improve conductivity of the electrolyte solution; and can have a reduction reaction, of which the product Li₂CO₃ has good thermal stability, and can improve the high-temperature cycling performance of the battery to a certain extent.

In some possible embodiments, the mass proportion of ethylene carbonate in the electrolyte solution is D%, and the C and the D satisfy 0.01%≤C/D≤1%; for example, C/D may be, but is not limited to, 0.01%, 0.02%, 0.03%, 0.04%, 0.05%, 0.06%, 0.07%, 0.08%, 0.09%, 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95%, 1%, or a range between any two of the above values. Since ethylene carbonate will occupy inner layer of the solvated structure of the electrolyte solution, and its high dielectric constant increases intermolecular orientation forces, thereby increasing phase transition point and viscosity of the electrolyte solution; sharply increasing the low-temperature viscosity, and affecting the desolvation process of lithium ions, wherein the desolvation process is a rate-determining step of charge transfer of the electrolyte at a low temperature, and therefore, when the mass proportion of ethylene carbonate in the electrolyte solution is too high, the low-temperature performance of the battery will be deteriorated; the third additive can also be involved in the formation of the solvated structure, thereby reducing the use amount of ethylene carbonate in the solvated structure, improving the low-temperature kinetics; and adjusting the use amount of ethylene carbonate and the third additive to balance between both the low-temperature performance and the high-temperature performance of the battery. When the C/D is located within the above range, both the low-temperature performance and the high-temperature performance of the battery are excellent; when the C/D is lower than the above range, improvement of the low-temperature performance of the battery may be limited; and when the C/D is higher than the above range, improvement of the high-temperature performance of the battery may be limited.

In some possible embodiments, the mass proportion of ethylene carbonate in the electrolyte solution is D%, 5≤D≤35; for example, the D may be, but is not limited to, 5, 7, 10, 12, 15, 17, 20, 22, 25, 27, 30, 32, 35, or a range between any two of the above values. When the mass proportion of ethylene carbonate in the electrolyte solution is lower than 5%, the effect on improvement of the conductivity of the electrolyte solution may be limited; and when the mass proportion of ethylene carbonate in the electrolyte solution is higher than 35%, the electrolyte solution has a large viscosity and a small low-temperature conductivity, which may deteriorate the low-temperature performance of the battery.

As an example, the mass proportion (D%) of ethylene carbonate in the electrolyte solution and the mass ratio (C/D) of the third additive to ethylene carbonate mentioned above can be determined with reference to GB/T9722-2006.

It should be noted that the above-mentioned D% refers to the mass proportion of ethylene carbonate in the electrolyte solution in the battery cell obtained after formation or in the battery cell after further charge and discharge cycles. The C/D refers to the mass ratio of the third additive to ethylene carbonate in the battery cell obtained after formation or in the battery cell after further charge and discharge cycles. The "battery cell obtained after formation" refers to a fresh battery cell obtained after formation without further charge-discharge cycles.

In some embodiments, the electrolyte solution further comprises a lithium salt.

Optionally, the lithium salt comprises one or more of lithium hexafluorophosphate, lithium bis(fluorosulfonyl)imide, and lithium bis(trifluoromethylsulfonyl)imide.

In some possible embodiments, mass proportion of the lithium salt in the electrolyte solution is 5%-15%; for example, may be, but is not limited to, 5%, 6%, 7%, 8%, 9%, 10%, 11%, 12%, 13%, 14%, 15%, or a range between any two of the above values. The lithium salt dissociates into ions in the electrolyte solution, and serves as a transmission medium during the charge-discharge. As the concentration of the lithium salt increases, the number of lithium ions in the electrolyte solution increases, and the conductivity of the electrolyte solution increases. When the mass proportion of the lithium salt in the electrolyte solution is within the above range, the conductivity of the electrolyte solution is high. When the mass proportion of the lithium salt in the electrolyte solution is higher than the above range, the electrolyte solution will increase too much in the viscosity, and will increase in the lithium-ion transmission resistance, but will decrease in the conductivity on the contrary.

It should be noted that the mass proportion of the lithium salt in the electrolyte solution mentioned above refers to the mass proportion of the lithium salt in the electrolyte solution in the battery cell obtained after formation or in the battery cell after further charge-discharge cycles. The "battery cell obtained after formation" refers to a fresh battery cell obtained after formation without further charge-discharge cycles.

As an example, the mass proportion of the lithium salt in the electrolyte solution mentioned above can be determined with reference to JY/T 0575-2020 General rules of analytical methods for ion chromatography.

In some embodiments thereof, the lithium salt in the electrolyte solution may further include one or more of lithium tetrafluoroborate (LiBF₄), lithium perchlorate (LiClO₄), lithium hexafluoroarsenate (LiAsF₆), lithium trifluoromethanesulfonate (LiTFS), lithium difluorophosphate (LiPO₂F₂), lithium difluorooxalatoborate (LiDFOB), lithium dioxalatoborate (LiBOB), lithium difluorodioxalatophosphate (LiDFOP), and lithium tetrafluorooxalatophosphate (LiTFOP).

In some embodiments thereof, the solvent in the electrolyte solution may further include one or more of propylene carbonate (PC, 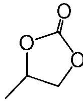 ), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate ( 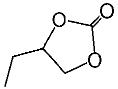 ), fluoroethylene carbonate (FEC), methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments thereof, the additive in the electrolyte solution may further include a negative electrode film-forming additive or a positive electrode film-forming additive, or may further include an additive that can improve some performances of the battery, such as an additive that improves overcharge performance of the battery or an additive that improves high-temperature or low-temperature performance of the battery.

In some embodiments, the additive in the electrolyte solution may further include, but is not limited to, one or more of difluoroethylene carbonate (DFEC), trifluoromethylethylene carbonate (TFPC), or the like.

The second aspect of the present application provides a secondary battery, comprising the electrolyte solution in the first aspect of the present application. The secondary battery of the present application has both excellent high-temperature performance and excellent low-temperature performance.

In general, the secondary battery comprises a positive electrode plate, a negative electrode plate, an electrolyte solution, and a separator. During charge-discharge of the battery, active ions are intercalated and deintercalated back and forth between the positive electrode plate and the negative electrode plate. The electrolyte in the electrolyte solution serves to conduct ions between the positive electrode plate and the negative electrode plate. The separator is arranged between the positive electrode plate and the negative electrode plate and mainly functions to prevent the positive and negative electrodes from short-circuiting while enabling ions to pass through.

### Negative electrode plate

The negative electrode plate comprises a negative electrode current collector and a negative electrode active material layer arranged on at least one surface of the negative electrode current collector, the negative electrode active material layer comprising a negative electrode active material.

As a non-limiting example, the negative electrode current collector has two surfaces opposite in its own thickness direction, and the negative electrode active material layer is arranged on any one or both of the two opposite surfaces of the negative electrode current collector.

In some embodiments, the secondary battery comprises a negative electrode plate, the negative electrode plate comprises a negative electrode active material layer, the negative electrode active material layer comprises a negative electrode active material; surface density of the negative electrode active material layer is Eg/m², specific surface area of the negative electrode active material is Fm²/g, mass proportion of the negative electrode active material in the negative electrode active material layer is L; the mass proportion of the second additive in the electrolyte solution is B%; and the B, the E, the F, and the L satisfy: 0.5%≤B/(E*F*L)≤12%. As an example, B/(E*F*L) may be, but is not limited to, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12%, or a range between any two of the above values.

It should be noted that the mass proportion of the negative electrode active material in the negative electrode active material layer mentioned above refers to the mass proportion of the negative electrode active material in the negative electrode active material layer in the battery cell obtained after formation or in the battery cell after further charge-discharge cycles. The "battery cell obtained after formation" refers to a fresh battery cell obtained after formation without further charge-discharge cycles.

The active material is a porous material with larger real surface and specific surface area. E*F*L represents real surface area of the active material per unit area of the electrode plate. The second additive is reduced to form a film by accepting electrons mainly on specific surface of the negative electrode active material. The larger the specific surface area is, the more the second additive is required. Since too much second additive is not conducive to the low-temperature charge-discharge performance, it is necessary to regulate the B value, the E value, the F value, and the L value. When the value of B/(E*F*L) is within the above range, the secondary battery has both good high-temperature cycling performance and good low-temperature performance; when the value of B/(E*F*L) is higher than the above range, it means that the content of the second additive is too much, the SEI film will be too thick, and the low-temperature performance of the battery may be affected; and when the value of B/(E*F*L) is lower than the above range, it means that the second additive is not enough to fully form a film on specific surface of the negative electrode material, exposed active sites will continue to have side reactions with the electrolyte solution, and the high-temperature cycling performance of the battery may be affected.

In some embodiments thereof, 80≤E≤150; for example, the E may be, but is not limited to, 80, 85, 90, 95, 100, 105, 110, 115, 120, 125, 130, 135, 140, 145, 150, or a range between any two of the above values.

As an example, the surface density of the negative electrode active material layer mentioned above can be determined by: discharging the battery to 2.0V at 0.1C, disassembling the battery, impregnating the negative electrode plate with a unit area V (100 cm²) with DMC for 48 h, drying the electrode plate at 60°C and under -80 kPa, and weighing the mass m1; then scraping off the slurry, and weighing the substrate mass m2; calculating the surface density of the negative electrode active material layer as per (m1-m2)/V for single-sided coating, and calculating the surface density of the negative electrode active material layer as per (m1-m2)/2/V for double-sided coating.

In some embodiments thereof, 0.5≤F≤5; for example, the F may be, but is not limited to, 0.5, 1, 1.5, 2, 2.5, 3, 3.5, 4, 4.5, 5, or a range between any two of the above values.

As an example, the specific surface area of the negative electrode active material mentioned above can be determined with reference to GB/T 19587-2017 Determination of the specific surface area of solids by gas adsorption using the BET method.

In some embodiments thereof, 95%≤L≤99%; for example, the L may be, but is not limited to, 95%, 95.5%, 96%, 96.5%, 97%, 97.5%, 98%, 98.5%, 99%, or a range between any two of the above values.

As an example, the mass proportion of the negative electrode active material in the negative electrode active material layer mentioned above can be determined by:
charging the battery to 3.8V at a constant current of 0.1C, and then charging at a constant voltage until the battery≤0.05C, wherein in this case, lithium is fully intercalated in the negative electrode active material graphite to form a compound LiC₆; testing the negative electrode film layer for the lithium content with reference to EPA6010D-2018 Inductively coupled plasma-atomic emission spectrometry, and calculating the content of the negative electrode active material in the negative electrode film layer accordingly, thus obtaining its mass proportion in the negative electrode active material layer.

In some embodiments thereof, a metal foil or a composite current collector may be used as the negative electrode current collector. For example, a copper foil may be used as the metal foil. The composite current collector may comprise a high molecular material substrate layer and a metal layer formed on at least one surface of a high molecular material substrate. The composite current collector may be obtained by forming a metal material on the high molecular material substrate. In the negative electrode current collector, non-limiting examples of the metal material may include one or more of copper, a copper alloy, nickel, a nickel alloy, titanium, a titanium alloy, silver, and a silver alloy, etc. In the negative electrode current collector, non-limiting examples of the high molecular material substrate may include one or more of substrates, such as polypropylene (PP), polyethylene terephthalate (PET), polybutylene terephthalate (PBT), polystyrene (PS), or polyethylene (PE).

In some embodiments thereof, a negative electrode active material for a battery well known in the art may be used as the negative electrode active material. As a non-limiting example, the negative electrode active material may include one or more of the following materials: artificial graphite, natural graphite, soft carbon, hard carbon, a silicon-based material, a tin-based material, lithium titanate, and the like. The silicon-based material may include one or more of elemental silicon, a silicon-oxygen compound, a silicon-carbon composite, a silicon-nitrogen composite, and a silicon alloy. The tin-based material may include one or more of elementary tin, a tin-oxygen compound, and a tin alloy. However, the present application is not limited to these materials, and other conventional materials that may be used as negative electrode active materials for batteries may also be used. Only one of these negative electrode active materials may be used alone, or more than two thereof may be used in a combination.

In some embodiments thereof, the negative electrode active material layer further optionally comprises a binder. The binder may include one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments thereof, the negative electrode active material layer further optionally comprises a conductive agent. The conductive agent may include one or more of superconducting carbon, acetylene black, carbon black, Ketjen black, carbon dot, carbon nanotube, graphene, and carbon nanofiber.

In some embodiments thereof, the negative electrode active material layer further optionally comprises other adjuvants, for example, a thickener (such as sodium carboxymethyl cellulose (CMC-Na)).

In some embodiments thereof, the negative electrode plate may be prepared by: dispersing the above ingredients, such as the negative electrode active material, the conductive agent, the binder, and any other ingredient, for preparing the negative electrode plate in a solvent (a non-limiting example of the solvent is, e.g., deionized water) to form a negative electrode slurry; and coating the negative electrode slurry on at least one side surface of the negative electrode current collector, followed by processes, such as drying and cold pressing, to provide the negative electrode plate. The negative electrode slurry may be coated on a single surface of the negative electrode current collector or on both surfaces of the negative electrode current collector. Solid content of the negative electrode slurry may be 40wt% to 60wt%. Viscosity of the negative electrode slurry at room temperature may be adjusted to 2,000 mPa·s to 10,000 mPa·s. Compacted density of the negative electrode plate may be 1.0 g/m³ to 2.0 g/m³.

### Positive electrode plate

The positive electrode plate comprises a positive electrode current collector and a positive electrode active material layer arranged on at least one surface of the positive electrode current collector.

In some embodiments, the positive electrode active material may further include one or more of a ternary material and a lithium iron manganese phosphate material; wherein the ternary material includes Lix(NiaCobMnc)1-dMdO2-yAy (x is 0.2 to 1.2) and/or LixAa(NiaCobMnc)1-dMdO2-yAy (x+a is 0.2 to 1.2); and the lithium iron manganese phosphate material includes LiaMn1-yByP1-zCzO4-nDn (a is 0 to 1.1) and/or LiaAxMn1-yByP1-zCzO4-nDn (a+x is 0 to 1.1).

It should be noted that the above definition of x includes the molar content of Li in different charge-discharge states of the battery (generally, the battery voltage is between 2 and 5V).

It is understandable that the battery will be accompanied by deintercalation and consumption of lithium (Li) during the charge-discharge, and the content of Li in the positive electrode plate is different when the battery is discharged to different states. In the enumeration of the positive electrode material in the present application, unless otherwise stated, the content of Li is the initial state of the material. The positive electrode material is applied to the positive electrode plate in the battery system, and after charge-discharge cycles, the content of Li in the positive electrode material contained in the electrode plate generally will change. The content of Li may be measured using, but not limited to, the molar content. Regarding "the content of Li is the initial state of the material", the initial state of the material refers to the state before the material is added to the positive electrode slurry. It is understandable that a new material obtained by appropriate modification on the basis of the enumerated positive electrode material is also within the scope of the positive electrode material. The aforementioned appropriate modification refers to an acceptable modification mode for the positive electrode material, and a non-limiting example thereof includes coating modification.

In the enumeration of the positive electrode active material in the present application, the content of oxygen (O) is only a theoretical state value. The release of oxygen from the crystal lattice will change the molar content of oxygen, and the actual content of O will fluctuate. The content of O may be measured using, but not limited to, the molar content.

As a non-limiting example, the positive electrode current collector has two surfaces opposite in its own thickness direction, and the positive electrode active material layer is arranged on any one or both of the two opposite surfaces of the positive electrode current collector.

In some embodiments thereof, a metal foil or a composite current collector may be used as the positive electrode current collector. For example, an aluminum foil may be used as the metal foil. The composite current collector may comprise a high molecular material substrate layer and a metal layer formed on at least one surface of the high molecular material substrate layer. The composite current collector may be obtained by forming a metal material on the high molecular material substrate. In the positive electrode current collector, non-limiting examples of the metal material may include one or more of aluminum, an aluminum alloy, nickel, a nickel alloy, titanium, a titanium alloy, silver, and a silver alloy, etc. In the positive electrode current collector, non-limiting examples of the high molecular material substrate may include one or more of substrates, such as polypropylene (PP), polyethylene terephthalate (PET), polybutylene terephthalate (PBT), polystyrene (PS), or polyethylene (PE).

In some embodiments thereof, a positive electrode active material for a battery well known in the art may be used as the positive electrode active material. As a non-limiting example, the positive electrode active material may further include one or more of the following materials: a lithium-containing phosphate of olivine structure, a lithium-transition metal oxide, and a respective modified compound thereof. However, the present application is not limited to these materials, and other conventional materials that may be used as positive electrode active materials for batteries may also be used. Only one of these positive electrode active materials may be used alone, or more than two thereof may be used in combination. Examples of the lithium-transition metal oxide may include, but are not limited to, one or more of a lithium-cobalt oxide (e.g., LiCoO₂), a lithium-nickel oxide, a lithium-manganese oxide, a lithium-nickel-cobalt oxide, a lithium-manganese-cobalt oxide, a lithium-nickel-manganese oxide, a lithium-nickel-cobalt-manganese oxide, a lithium-nickel-cobalt-aluminum oxide, a modified compound thereof, and the like. Non-limiting examples of the lithium-containing phosphate of olivine structure may include, but are not limited to, one or more of a lithium iron phosphate, a lithium iron phosphate-carbon composite material, a lithium manganese phosphate, a lithium manganese phosphate-carbon composite material, a lithium iron manganese phosphate, and a lithium iron manganese phosphate-carbon composite material. Non-limiting examples of the lithium-cobalt oxide may include LiCoO₂; non-limiting examples of the lithium-nickel oxide may include LiNiO₂; non-limiting examples of the lithium-manganese oxide may include, e.g., LiMnO₂ or LiMn₂O₄, etc.; and non-limiting examples of the lithium-nickel-cobalt-manganese oxide may include, e.g., LiNi_{1/3}CO_{1/3}Mn_{1/3}O₂ (or abbreviated as NCM₃₃₃), LiNi_{0.5}Co_{0.2}Mn_{0.3}O₂ (or abbreviated as NCM₅₂₃), LiNi_{0.5}Co_{0.25}Mn_{0.25}O₂ (or abbreviated as NCM₂₁₁), LiNi_{0.6}Co_{0.2}Mn_{0.2}O₂ (or abbreviated as NCM₆₂₂), or LiNi_{0.8}Co_{0.1}Mn_{0.1}O₂ (or abbreviated as NCM₈₁₁), etc. Non-limiting examples of the lithium-nickel-cobalt-aluminum oxide may include LiNi_{0.85}Co_{0.15}Al_{0.05}O₂.

In some embodiments thereof, the positive electrode active material layer further optionally comprises a binder. As a non-limiting example, the binder may comprise one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments thereof, the positive electrode active material layer further optionally comprises a conductive agent. As a non-limiting example, the conductive agent may comprise one or more of superconducting carbon, acetylene black, carbon black, Ketjen black, carbon dot, carbon nanotube, graphene, and carbon nanofiber.

In some embodiments thereof, the positive electrode plate may be prepared by: dispersing the above ingredients, such as the positive electrode active material, the conductive agent, the binder, and any other ingredient, for preparing the positive electrode plate in a solvent to form a positive electrode slurry; and coating the positive electrode slurry on at least one side surface of the positive electrode current collector, followed by processes, such as drying and cold pressing, to provide the positive electrode plate. The type of the solvent may be selected from, but is not limited to, any one in the above embodiments, such as N-methylpyrrolidone (NMP). The positive electrode slurry may be coated on a single surface of the positive electrode current collector or on both surfaces of the positive electrode current collector. The positive electrode slurry may be coated on a single surface of the positive electrode current collector or on both surfaces of the positive electrode current collector. Solid content of the positive electrode slurry may be 40wt% to 80wt%. Viscosity of the positive electrode slurry at room temperature may be adjusted to 5,000 mPa·s to 25,000 mPa·s. When the positive electrode slurry is coated, unit surface density of the coating may be 15 mg/m² to 35 mg/m² based on dry weight (excluding the solvent). Compacted density of the positive electrode plate may be 2 g/m³ to 3 g/m³.

### Separator

The type of the separator is not particularly limited in the present application, and any well-known porous-structured separator having good chemical stability and mechanical stability may be selected.

In some embodiments thereof, the material of the separator may be one or more of glass fiber, non-woven cloth, polyethylene, polypropylene, and polyvinylidene fluoride. The separator may be a monolayer film, or may be a multi-layer composite film, which is not particularly limited. When the separator is a multi-layer composite film, the material in each layer may be identical or different, which is not particularly limited.

In some embodiments, thickness of the separator is 6 µm to 40 µm, and optionally 12 µm to 20 µm.

In some embodiments thereof, the positive electrode plate, the negative electrode plate, and the separator may be made into an electrode assembly by a winding process or a stacking process.

In some embodiments thereof, the secondary battery may comprise an outer package. The outer package may be used to encapsulate the above electrode assembly and an electrolyte.

In some embodiments thereof, the outer package of the secondary battery may be a hard shell, such as a hard plastic shell, an aluminum shell, or a steel shell. The outer package of the secondary battery may also be a pouch, such as a bag-type pouch. The material of the pouch may be plastic, and further, non-limiting examples of the plastic may include one or more of polypropylene, polybutylene terephthalate, polybutylene succinate, and the like.

The secondary battery comprises at least one battery cell. The secondary battery may comprise 1 or more battery cells.

In the present application, unless otherwise stated, the "battery cell" refers to a basic unit that can achieve mutual conversion between chemical energy and electrical energy, and further, generally at least comprises a positive electrode plate, a negative electrode plate, and an electrolyte. During charge-discharge of the battery, active ions are intercalated and deintercalated back and forth between the positive electrode plate and the negative electrode plate. The electrolyte serves for conducting the active ions between the positive electrode plate and the negative electrode plate.

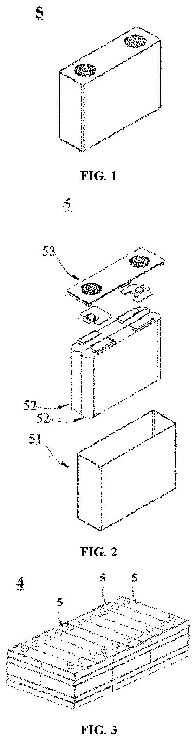

The shape of the battery cell is not particularly limited in the present application, and may be a cylinder shape, a square shape, or any other shape. For example, FIG. 1 shows a battery cell 5 with a square structure as an example.

In some embodiments thereof, referring to FIG. 2, the outer package may comprise a case 51 and a cover plate 53. The case 51 may comprise a bottom plate and a side plate connected to the bottom plate, wherein the bottom plate and the side plate enclose to form an accommodating cavity. The case 51 has an opening in communication with the accommodating cavity, and the cover plate 53 can cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 comprised in the battery cell 5 may be one or more, and may be selected by those skilled in the art based on actual requirements.

The secondary battery may be a battery module or a battery pack.

The battery module comprises at least one battery cell. The number of battery cells comprised in the battery module may be one or more, and those skilled in the art may select an appropriate number according to the application and capacity of the battery module.

FIG. 3 shows a battery module 4 as an example. Referring to FIG. 3, in the battery module 4, a plurality of battery cells 5 may be arranged sequentially along a length direction of the battery module 4, or, of course, may be arranged in any other manner. Furthermore, the plurality of battery cells 5 may be fixed by fasteners.

Optionally, the battery module 4 may further comprise a shell having an accommodating space, in which the plurality of battery cells 5 are accommodated.

In some embodiments thereof, the above battery modules may be further assembled into a battery pack, the number of battery modules comprised in the battery pack may be one or more, and an appropriate number may be selected by those skilled in the art based on the application and capacity of the battery pack.

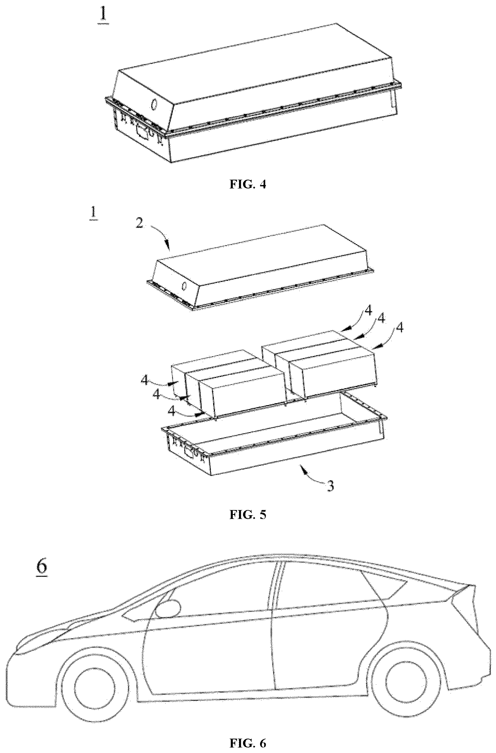

FIGS. 4 and 5 show a battery pack 1 as an example. Referring to FIGS. 4 and 5, the battery pack 1 may comprise a battery box and a plurality of battery modules 4 arranged in the battery box. The battery box comprises an upper box 2 and a lower box 3, where the upper box 2 can cover the lower box 3 and forms an enclosed space for accommodating the battery module 4. The plurality of battery modules 4 may be arranged in the battery box in any manner.

In addition, the present application further provides an electrical apparatus, comprising the secondary battery provided in the present application. The secondary battery may be used as a power source of the electrical apparatus, or may be used as an energy storage unit of the electrical apparatus. The electrical apparatus may include, but is not limited to, a mobile device, an electric vehicle, an electric train, a ship, a satellite, an energy storage system, and the like. The mobile device may be, for example, a mobile phone or a laptop; and the electric vehicle may be, for example, but is not limited to, an all-electric vehicle, a hybrid electric vehicle, a plug-in hybrid electric vehicle, an electric bicycle, an electric scooter, an electric golf cart, an electric truck, and the like.

For the electrical apparatus, the secondary battery may be selected based on use requirements thereof.

FIG. 6 shows an electrical apparatus 6 as an example. The electrical apparatus is, e.g., an all-electric vehicle, a hybrid electric vehicle, or a plug-in hybrid electric vehicle. To satisfy the need of the electrical apparatus for a high power and high energy density of secondary batteries, a battery pack or a battery module can be used.

The device used as another example can be, for example, a mobile phone, a tablet computer, a laptop, etc. The apparatus is generally required to be light and thin, and may use a secondary battery as a power source.

### EXAMPLES

Examples of the present application will be described below. The embodiments described below are illustrative, are merely used to explain the present application, and should not be construed as limiting the present application. The embodiments in which techniques or conditions are not specified are implemented based on the techniques or conditions described in literatures of the art or based on the product manuals. Where no manufacturers are specified, the employed reagents or instruments are all commercially available conventional products.

### I. Preparation of a secondary battery

### Example 1

### 1). Preparation of a positive electrode plate

The positive electrode material LiFePO₄, polyvinylidene fluoride (PVDF), and carbon black (SP) at a mass ratio of 96:3:1 were mixed with a solvent dimethyl sulfoxide, and the mixture was stirred to obtain a uniformly dispersed positive electrode slurry, which was uniformly coated on two surfaces of an aluminum foil. The aluminum foil was dried, cold pressed, and cut to provide the positive electrode plate.

### 2). Preparation of a negative electrode plate

Artificial graphite, carbon black (SP), styrene butadiene rubber (SBR), and sodium hydroxymethylcellulose (CMC) at a mass ratio of 96:1.5:1.5:1 were mixed, deionized water was added, the mixture was stirred to obtain a uniformly dispersed negative electrode slurry, and the negative electrode slurry was uniformly coated on two surfaces of a copper foil, which was dried, cold pressed, and cut to provide the negative electrode plate; wherein specific surface area of the negative electrode active material artificial graphite was 1 m²/g, and unit surface density of the coating of the negative electrode active material was 90 g/m².

### 3). Separator

A polyethylene film was used as the separator.

### 4). Preparation of an electrolyte solution

In an argon atmosphere glove box, ethylene carbonate (EC, as a solvent), dimethyl carbonate (DMC, as a solvent), ethyl methyl carbonate (EMC, as a solvent), diethyl carbonate (DEC, as a solvent), vinylene carbonate (VC, as a second additive), lithium difluorophosphate (LiPO₂F₂, as a first additive), N-methylpyrrolidone (NMP, as a third additive), and lithium hexafluorophosphate (LiPF₆, as a lithium salt) were mixed and dissolved based on mass percentage, to provide the electrolyte solution.

### 5). Preparation of a battery cell

The positive electrode plate, the negative electrode plate, and the separator were made into an electrode assembly by a winding process or a stacking process, and transferred in a shell composed of, e.g., an aluminum shell and an aluminum plastic film, and then the secondary battery was obtained after liquid injection, high temperature standing, formation, and capacity grading of the above-mentioned electrolyte solution.

Liquid retention coefficient of the battery cell is 3 g/Ah.

### Examples 2-24

The main differences between the preparation method of the secondary battery in Examples 2-24 and the preparation method of the secondary battery in Example 1 are that: at least one of the mass percentage of the solvent in the electrolyte solution, the type and/or use amount of the first additive, the type and/or use amount of the second additive, the type and/or use amount of the third additive, the specific surface area of the negative electrode active material, the unit surface density of the coating of the negative electrode active material, and the mass proportion of the negative electrode active material in the negative electrode active material layer is different, as detailed in Table 1.

### Comparative Example 1

None of the first additive, the second additive, and the third additive was added in Comparative Example 1, as detailed in Table 1.

### Comparative Example 2

In the electrolyte solution of Comparative Example 2, the second additive was not added, and only the first additive and the third additive were added, as detailed in Table 1.

### Comparative Example 3

In the electrolyte solution of Comparative Example 3, the first additive was not added, and only the second additive and the third additive were added, as detailed in Table 1.

### Comparative Example 4

In the electrolyte solution of Comparative Example 4, the third additive was not added, and only the first additive and the second additive were added, as detailed in Table 1.

The secondary batteries prepared in the above examples and comparative examples were tested for parameters at least including the following items:
The mass percentages of EC, DMC, EMC, DEC, the first additive, the second additive, the third additive, and the lithium salt in the electrolyte solution, for calculation of (A+C)/B, C/D, and B/(E*F*L), as detailed in Table 1.

The parameter settings of the above examples and comparative examples are as shown in Table 1.

**Table 1**

| Group No. | Ingredients in the electrolyte solution and corresponding mass proportions thereof (%) | | | | | | | | E (g/ m²) | F (m²/ g) | L | (A+C )/B | C/D | B/(E*F *L) |
|---|---|---|---|---|---|---|---|---|---|---|---|---|---|---|
| | E C (D ) | DM C | EM C | DE C | Type and proport ion B of second additiv e | Type and proportion A of first additive | Type and proport ion C of third additiv e | LiP F₆ | | | | | | |
| Example 1 | 3 0 | 40 | 5 | 11. 45 | 3,VC | 0.5, LiPO₂F₂ | 0.05,N MP | 10 | 90 | 1 | 96 % | 18.3 % | 0.2 % | 3.5% |
| Example 2 | 3 0 | 40 | 5 | 13. 45 | 1,VC | 0.5, LiPO₂F₂ | 0.05,N MP | 10 | 90 | 1 | 96 % | 55.0 % | 0.2 % | 1.2% |
| Example 3 | 3 0 | 40 | 5 | 4.4 5 | 10,VC | 0.5, LiPO₂F₂ | 0.05,N MP | 10 | 90 | 1 | 96 % | 5.5% | 0.2 % | 11.6% |
| Example 4 | 3 0 | 40 | 5 | 13. 95 | 0.5,VC | 0.5,LiPO₂ F₂ | 0.05,N MP | 10 | 90 | 1 | 96 % | 110.0 % | 0.2 % | 0.6% |
| Example 5 | 3 0 | 40 | 5 | 11. 94 | 3,VC | 0.01,LiPO 2F2 | 0.05,N MP | 10 | 90 | 1 | 96 % | 2.0% | 0.2 % | 3.5% |
| Example 6 | 3 0 | 40 | 5 | 11. 85 | 3,VC | 0.1,LiPO₂ F₂ | 0.05,N MP | 10 | 90 | 1 | 96 % | 5.0% | 0.2 % | 3.5% |
| Example 7 | 3 0 | 40 | 5 | 10. 95 | 3,VC | 1,LiPO₂F₂ | 0.05,N MP | 10 | 90 | 1 | 96 % | 35.0 % | 0.2 % | 3.5% |
| Example 8 | 3 0 | 40 | 5 | 11. 49 | 3,VC | 0.5, LiPO₂F₂ | 0.01,N MP | 10 | 90 | 1 | 96 % | 17.0 % | 0.03 % | 3.5% |
| Example 9 | 3 0 | 40 | 0 | 16. 4 | 3,VC | 0.5, LiPO₂F₂ | 0.1,N MP | 10 | 90 | 1 | 96 % | 20.0 % | 0.3 % | 3.5% |
| Example 10 | 5 | 40 | 5 | 36. 45 | 3,VC | 0.5, LiPO₂F₂ | 0.05,N MP | 10 | 90 | 1 | 96 % | 18.3 % | 1.0 % | 3.5% |
| Example 11 | 3 5 | 40 | 5 | 6.4 5 | 3,VC | 0.5, LiPO₂F₂ | 0.05,N MP | 10 | 90 | 1 | 96 % | 18.3 % | 0.1 % | 3.5% |
| Example 12 | 3 0 | 40 | 5 | 11. 45 | 3,VC | 0.5, LiPO₂F₂ | 0.05,N MP | 10 | 80 | 1 | 96 % | 18.3 % | 0.2 % | 3.9% |
| Example 13 | 3 0 | 40 | 5 | 11. 45 | 3,VC | 0.5, LiPO₂F₂ | 0.05,N MP | 10 | 150 | 1 | 96 % | 18.3 % | 0.2 % | 2.1% |
| Example 14 | 3 0 | 40 | 5 | 11. 45 | 3,VC | 0.5, LiPO₂F₂ | 0.05,N MP | 10 | 90 | 0.5 | 96 % | 18.3 % | 0.2 % | 6.9% |
| Example 15 | 3 0 | 40 | 5 | 11. 45 | 3,VC | 0.5, LiPO₂F₂ | 0.05,N MP | 10 | 90 | 5 | 96 % | 18.3 % | 0.2 % | 0.7% |
| Example 16 | 3 0 | 40 | 5 | 11. 45 | 3,VC | 0.5, LiPO₂F₂ | 0.05,N MP | 10 | 90 | 1 | 93 % | 18.3 % | 0.2 % | 3.6% |
| Example 17 | 3 0 | 40 | 5 | 11. 45 | 3,VC | 0.5, LiPO₂F₂ | 0.05,N MP | 10 | 90 | 1 | 98 % | 18.3 % | 0.2 % | 3.4% |
| Example 18 | 3 0 | 40 | 5 | 11. 45 | 3,BDT D | 0.5, LiPO₂F₂ | 0.05,N MP | 10 | 90 | 1 | 96 % | 18.3 % | 0.2 % | 3.5% |
| Example 19 | 3 0 | 40 | 5 | 11. 45 | 3, PS | 0.5, LiBF₄ | 0.05, DMF | 10 | 90 | 1 | 96 % | 18.3 % | 0.2 % | 3.5% |
| Example 20 | 3 0 | 40 | 5 | 11. 45 | 3, DTD | 0.5, lithium fluorosulf onate | 0.05, DMF | 10 | 90 | 1 | 96 % | 18.3 % | 0.2 % | 3.5% |
| Example 21 | 3 0 | 40 | 5 | 13. 9 | 0.5,VC | 0.5,LiPO₂ F₂ | 0.1,N MP | 10 | 90 | 1 | 96 % | 120.0 % | 0.3 % | 0.6% |
| Example 22 | 3 0 | 40 | 5 | 13. 4 | 0.5,VC | 1.0,LiPO₂ F₂ | 0.1,N MP | 10 | 90 | 1 | 96 % | 220.0 % | 0.3 % | 0.6% |
| Example 23 | 3 0 | 40 | 5 | 11. 98 | 1.5,VC | 0.01,LiPO 2F2 | 0.01,N MP | 10 | 90 | 1 | 96 % | 1.33 % | 0.03 % | 1.75% |
| Example 24 | 0 | 40 | 5 | 41. 45 | 3,VC | 0.5,LiPO₂ F₂ | 0.05,N MP | 10 | 90 | 1 | 96 % | 18.3 % | / | 3.5% |
| Compara tive Example 1 | 3 0 | 40 | 5 | 15 | 0 | 0 | 0 | 10 | 90 | 1 | 96 % | / | 0 | 0 |
| Compara tive Example 2 | 3 0 | 40 | 5 | 14. 45 | 0 | 0.5, LiPO₂F₂ | 0.05,N MP | 10 | 90 | 1 | 96 % | / | 0.2 % | 0 |
| Compara tive Example 3 | 3 0 | 40 | 5 | 11. 95 | 3,VC | 0 | 0.05,N MP | 10 | 90 | 1 | 96 % | 1.7% | 0.2 % | 3.5% |
| Compara tive Example 4 | 3 0 | 40 | 5 | 11. 5 | 3,VC | 0.5,LiPO₂ F₂ | 0 | 10 | 90 | 1 | 96 % | 16.7 % | 0 | 3.5% |

In Table 1, n represents the percentage of the mass of the second lithium salt in the mass of the first lithium salt, T represents the thickness of the positive electrode plate, A% represents the mass proportion of the first additive in the electrolyte solution, B% represents the mass proportion of the second additive in the electrolyte solution, C% represents the mass proportion of the third additive in the electrolyte solution, D% represents the mass proportion of ethylene carbonate in the electrolyte solution, VC represents vinylene carbonate, PS represents 1,3-propanesultone, DTD represents ethylene sulfate, BDTD represents bis(ethylene sulfate), NMP represents N-methylpyrrolidone, DMP represents N,N-dimethylformamide, E represents the unit surface density of the coating of the negative electrode active material, F represents the specific surface area of the negative electrode active material, and L represents the mass proportion of the negative electrode active material in the negative electrode active material layer.

The mass proportion of the first additive in the electrolyte solution mentioned above was determined with reference to JY/T 0575-2020 General rules of analytical methods for ion chromatography.

The mass proportion of the second additive in the electrolyte solution and the mass proportion of the third additive in the electrolyte solution mentioned above were determined with reference to GB/T9722-2006 Chemical reagent-General rules for the gas chromatography.

The mass proportion of EC and the mass ratio (C/D) of the third additive to ethylene carbonate in the electrolyte solution mentioned above were determined with reference to GB/T9722-2006 Chemical reagent-General rules for the gas chromatography.

The mass proportion of the lithium salt in the electrolyte solution mentioned above was determined with reference to JY/T 0575-2020 General rules of analytical methods for ion chromatography.

The specific surface area of the negative electrode active material mentioned above was determined with reference to GB/T 19587-2017 Determination of the specific surface area of solids by gas adsorption using the BET method.

The unit surface density of the coating of the negative electrode active material layer mentioned above was determined by: discharging the battery to 2.0V at 0.1C, disassembling the battery, impregnating the negative electrode plate with a unit area V (100 cm²) with DMC for 48 h, drying the electrode plate at 60°C and under -80kPa, and weighing the mass m1; then scraping off the slurry, and weighing the substrate mass m2; and calculating the surface density of the coating of the negative electrode active material as per (m1-m2)/2/V.

The mass proportion of the negative electrode active material in the negative electrode active material layer mentioned above was determined by: charging the battery to 3.8V at a constant current of 0.1C, and then charging at a constant voltage until the battery≤0.05C, wherein in this case, lithium is fully intercalated in the negative electrode active material graphite to form a compound LiC₆; testing the negative electrode film layer for the lithium content with reference to EPA6010D-2018 Inductively coupled plasma-atomic emission spectrometry, and calculating the graphite content in the negative electrode film layer accordingly, thus obtaining its mass proportion in the negative electrode active material layer.

### II. Battery cell performance test

### 1. Determination of high-temperature cycling performance at 60°C

At 60°C, each of the secondary batteries in the examples and the comparative examples was charged to the upper limit voltage of 3.8V at a constant current of 0.5C, and then charged to a current of 0.05C at a constant voltage; the battery was left to stand for 5 min and discharged to 2.0V at a constant current of 1/3C, which was the first charge-discharge cycle of the battery, and this discharge capacity was denoted as the discharge capacity D1 of the first cycle of the battery; the battery was tested for cyclic charge-discharge as mentioned above, the capacity Dn of the battery at the n-th cycle was recorded, and the capacity retention rate was Dn/D1. The number of cycles when the capacity retention rate was 80% was recorded.

### 2. Test for low-temperature cycling performance at -10°C

At -10°C, each of the secondary batteries in the examples and the comparative examples was charged to the upper limit voltage of 3.8V at a constant current of 0.2C, and then charged to a current of 0.05C at a constant voltage; the battery was left to stand for 5 min and discharged to 2.0V at a constant current of 1/3C, which was the first charge-discharge cycle of the battery, and this discharge capacity was denoted as the discharge capacity D1 of the first cycle of the battery. The discharge capacity at the n-th cycle was Dn, the capacity retention rate was Dn/D1, and the number of cycles when the battery capacity retention rate was 80% was recorded.

The performance test results of the examples and the comparative examples mentioned above are as shown in Table 2.

**Table 2**

| Group No. | Number of cycles (cyls) at 60°C | Number of cycles (cyls) at -10°C |
|---|---|---|
| Example 1 | 1195 | 407 |
| Example 2 | 963 | 452 |
| Example 3 | 1377 | 339 |
| Example 4 | 938 | 484 |
| Example 5 | 1239 | 345 |
| Example 6 | 1204 | 397 |
| Example 7 | 1126 | 503 |
| Example 8 | 1259 | 394 |
| Example 9 | 1102 | 443 |
| Example 10 | 935 | 469 |
| Example 11 | 1217 | 352 |
| Example 12 | 1295 | 459 |
| Example 13 | 1078 | 353 |
| Example 14 | 1283 | 375 |
| Example 15 | 1002 | 498 |
| Example 16 | 958 | 512 |
| Example 17 | 1260 | 399 |
| Example 18 | 1173 | 439 |
| Example 19 | 1072 | 313 |
| Example 20 | 1096 | 402 |
| Example 21 | 901 | 497 |
| Example 22 | 723 | 512 |
| Example 23 | 994 | 301 |
| Example 24 | 712 | 321 |
| Comparative Example 1 | 164 | 93 |
| Comparative Example 2 | 378 | 203 |
| Comparative Example 3 | 672 | 174 |
| Comparative Example 4 | 653 | 232 |

As can be seen from the comparison of the results in Examples 1-24 and Comparative Examples 1-4, the first additive, the second additive, and the third additive were all added to the electrolyte solution provided in the present application to improve both the high-temperature performance and the low-temperature performance of the secondary battery. Further, as can be seen from the comparison of the results in Examples 1-21 and Examples 22-23, the use amounts of the first additive, the second additive, and the third additive were adjusted to satisfy 2%≤(A+C)/B≤120%, thus improving both the high-temperature performance and the low-temperature performance of the secondary battery.

The main differences between Example 24 and Examples 1 and 10-11 are that: EC was not added to the electrolyte solution in Example 24; EC has a high dielectric constant, can dissociate a lithium salt to improve the conductivity of the electrolyte solution, and can further obtain a product Li₂CO₃ with good thermal stability through a reduction reaction to improve the high-temperature cycling performance of the battery to a certain extent; however, the sharp increase of the EC viscosity at a low temperature may increase the viscosity of the electrolyte solution, reduce the conductivity, and affect the low-temperature performance, while EC in combination with the third additive can improve the low-temperature performance of the battery; and therefore, as can be seen from the comparison of the results in Example 24 with those in Examples 1 and 10-11, EC was added to the electrolyte solution to further improve the high-temperature performance and the low-temperature performance of the battery cell.

The above description of the examples tends to emphasize the differences among the examples, and reference may be made to each other for similarities thereof, which will not be repeated herein for the sake of brevity.

It should be noted that the present application is not limited to the above embodiments. The above embodiments are only examples, and embodiments that have the same composition and exert the same effect as the technical ideas within the scope of the technical solution of the present application are included in the technical scope of the present application. In addition, without departing from the scope of the main intention of the present application, various modifications that can be conceived by those skilled in the art are applied to the embodiments, and other modes constructed by combining some of the constituent elements of the embodiments are also included within the scope of the present application.

## Claims

1. An electrolyte solution, comprising:
a first additive comprising an inorganic salt containing fluorine element;
a second additive comprising a compound containing an unsaturated bond, wherein the compound containing an unsaturated bond has a reduction potential of greater than or equal to 0.8 V(Li⁺/Li); and
a third additive comprising a compound containing an amide group.

2. The electrolyte solution according to claim 1, wherein mass proportion of the first additive in the electrolyte solution is A%, mass proportion of the second additive in the electrolyte solution is B%, mass proportion of the third additive in the electrolyte solution is C%, and the A, the B, and the C satisfy: 2%≤(A+C)/B≤120%; and
optionally, 5%<(A+C)/B<55%.

3. The electrolyte solution according to claim 2, wherein 0.01≤A≤1.

4. The electrolyte solution according to any one of claims 2 to 3, wherein 0.5≤B≤10.

5. The electrolyte solution according to any one of claims 2 to 4, wherein 0.01≤C≤0.1.

6. The electrolyte solution according to any one of claims 1 to 5, wherein mass proportion of the fluorine element in the inorganic salt is greater than or equal to 8%; and
optionally, the first additive comprises one or more of a difluorophosphate, a tetrafluoroborate, and a fluorosulfonate containing M element, the M element comprising one or more of Li, Na, K, and Cs.

7. The electrolyte solution according to any one of claims 1 to 6, wherein the second additive comprises a cyclic compound containing an unsaturated bond; and
optionally, the second additive comprises one or more of vinylene carbonate, 1,3-propanesultone, ethylene sulfate, and bis(ethylene sulfate).

8. The electrolyte solution according to any one of claims 1 to 7, wherein the third additive comprises one or more of compounds represented by formulas (I) and (II) below: 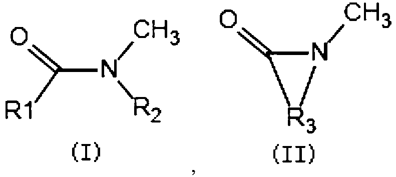
wherein R₁ and R₂ each independently comprise any one of hydrogen, methyl, and ethyl, and R₃ comprises a C₃-C₆ alkylene; and
optionally, the third additive comprises one or more of N,N-dimethylformamide and N-methylpyrrolidone.

9. The electrolyte solution according to any one of claims 2 to 8, wherein the electrolyte solution further comprises a cyclic ester solvent;
optionally, the cyclic ester solvent comprises one or more of ethylene carbonate and propylene carbonate;
further optionally, mass proportion of the ethylene carbonate in the electrolyte solution is D%, and the C and the D satisfy 0.01%≤C/D≤1%; and
still further optionally, 5≤D≤35.

10. The electrolyte solution according to any one of claims 1 to 9, wherein the electrolyte solution further comprises a lithium salt;
optionally, the lithium salt comprises one or more of lithium hexafluorophosphate, lithium bis(fluorosulfonyl)imide, and lithium bis(trifluoromethylsulfonyl)imide; and
optionally, mass proportion of the lithium salt in the electrolyte solution is 5%-15%.

11. A secondary battery, comprising the electrolyte solution according to any one of claims 1 to 10.

12. The secondary battery according to claim 11, wherein the secondary battery comprises a negative electrode plate, the negative electrode plate comprises a negative electrode active material layer, the negative electrode active material layer comprises a negative electrode active material; surface density of the negative electrode active material layer is Eg/m², specific surface area of the negative electrode active material is Fm²/g, and mass proportion of the negative electrode active material in the negative electrode active material layer is L;
the mass proportion of the second additive in the electrolyte solution is B%; and
the B, the E, the F, and the L satisfy: 0.5%≤B/(E*F*L)≤12%.

13. The secondary battery according to claim 12, wherein 80≤E≤150.

14. The secondary battery according to any one of claims 12 to 13, wherein 0.5≤F≤5.

15. The secondary battery according to any one of claims 12 to 14, wherein 93%≤L≤98%.

16. An electrical apparatus, comprising at least one of the electrolyte solution according to any one of claims 1 to 10 and the secondary battery according to any one of claims 11 to 15.
